# EUROPEAN PATENT APPLICATION

(11) **EP 2 390 782 A2**
(43) Date of publication of application: **30.11.2011**
(21) Application number: 11167803.3
(22) Date of filing: 27.05.2011
(51) Int. Cl.: G06F 3/12

(54) **Method and apparatus for forming an image**

(30) Priority: 31.05.2010 KR 20100051435
(71) Applicant: SAMSUNG ELECTRONICS CO., LTD., Suwon-si Gyeonggi-do 442-742 (KR)
(72) Inventor: Lee, Jun-seung, Gyeonggi-do (KR)
(74) Representative: Davies, Robert Ean

(57) **Abstract**

A method and an apparatus for forming an image by rendering content according to a digital living network alliance (DLNA) standard. According to the method and the apparatus, content that may be processed by the apparatus is acquired from the host by using at least one of services defined in the DLNA standard, and an image corresponding to the acquired content is formed and output.

## Description

### CROSS-REFERENCE TO RELATED APPLICATIONS

This application claims the benefit of Korean Patent Application No. 10-2010-0051435, filed on May 31, 2010, in the Korean Intellectual Property Office, the disclosure of which is incorporated herein in its entirety by reference.

### BACKGROUND

### 1. Field

The present general inventive concept relates to a method and an apparatus for forming an image, and more particularly, to a method and an apparatus for forming an image in a digital living network alliance (DLNA) network environment.

### 2. Description of the Related Art

Demands for sharing digital media contents, such as motion pictures, music, pictures, or the like, between various household devices, e.g., electronic appliances, mobile phones, personal computers, or the like, have increased constantly. Digital living network alliance (DLNA) is a standard adopted by various manufacturers to enable sharing of contents between various devices manufactured by different manufacturers via a home network.

Devices defined in the DLNA standard includes a digital media server (DMS), which provides contents, a digital media renderer (DMR), which renders contents, and a digital media controller (DMC), which searches for contents provided by the DMS, matches a searched content to the rendering capability of the DMR, and sets up a connection between the DMS and the DMR.

### SUMMARY

The present general inventive concept provides a method and an apparatus for enabling printing images in a general digital living network alliance (DLNA) environment without installing additional applications or drivers. Furthermore, the present general inventive concept also provides a computer readable recording medium having recorded thereon a computer program for implementing the method on a computer. However, the present general inventive concept may cover other technical goals.

According to an aspect, there is provided an image forming apparatus for forming an image according to a predetermined standard, including a renderer function unit, which acquires content that may be processed by the image forming apparatus from a host by using at least one of services complying with the predetermined standard; an interpreter, which provides information regarding processing capabilities of the image forming apparatus to the host via the renderer function unit and interprets the content; and an output unit, which forms and outputs an image corresponding to the content based on the interpretation of the content.

According to another aspect, there is provided a method of forming an image by rendering content according to a predetermined standard, the method including providing description of an image forming apparatus, the description indicating that the image forming apparatus is a media renderer, to the host; acquiring content from the host, which received the description, by using at least one of services defined in the predetermined standard; and forming and outputting an image corresponding to the acquired content.

According to another aspect, there is provided a computer readable recording medium having recorded thereon a computer program for implementing the method of forming an image.

### BRIEF DESCRIPTION OF THE DRAWINGS

The above and other features and advantages of the present general inventive concept will become more apparent by describing in detail exemplary embodiments thereof with reference to the attached drawings in which:
FIG. 1 is a block diagram of a DLNA network system according to an embodiment;
FIG. 2 is a block diagram showing configurations of a printer and a host according to an embodiment;
FIG. 3 is a diagram showing description of a printer according to an embodiment;
FIG. 4 is a flowchart of a method of transmitting the information regarding processing capabilities of the printer, according to an embodiment;
FIG. 5 is a diagram showing information regarding processing capabilities of a printer, according to an embodiment;
FIG. 6 is a flowchart of a method of printing content by using the printer as a digital media renderer (DMR), according to an embodiment;
FIG. 7 is a diagram showing a method of printing content according to a modification of the embodiment shown in FIG. 6;
FIG. 8 is a flowchart of a method of printing content via an interaction between the host shown in FIG. 2 and a user; and
FIG. 9 is a diagram showing an example of user interfaces (UIs) displayed by the host shown in FIG. 2.

### DETAILED DESCRIPTION

According to the current digital living network alliance (DLNA) standard, a printer supporting a digital media printing (DMPr) function and a host supporting a printer controller (PR) function complying with the DLNA standard are necessary to transmit content stored in other host, such as a personal computer (PC) or a mobile phone within a household, to a printer and to print the content. Although various devices supporting functions complying to the DLNA standard are currently available on the market, a printer and a host supporting functions as described above are not yet available. According to the present general inventive concept, a general DLNA device not supporting the DMPr function and the PR function may print content without installing an additional application or driver for embodying the DMPr function and the PR function.

The present general inventive concept will now be described more fully with reference to the accompanying drawings, in which exemplary embodiments of the present general inventive concept are shown. Especially, a printer for forming an image on a printing medium will be described below as an example of an image forming apparatus defined by claims of the present general inventive concept. However, the image forming apparatus defined by the claims of the present general inventive concept may be applied not only to a printer as described below, but also to an image forming apparatus of other type, e.g., a multifunctional peripheral (MFP).

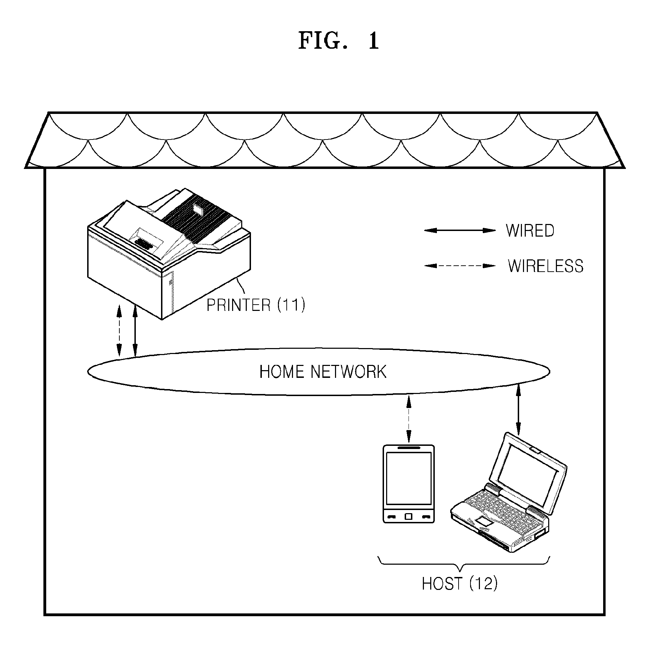

FIG. 1 is a block diagram of a DLNA network system according to an embodiment. Referring to FIG. 1, the DLNA network system includes a printer 11 and at least one host 12. The host 12 may be not only a mobile phone or a PC as shown in FIG. 1, but also any various device supporting DLNA networking. In the present embodiment, in consideration of a general printing environment in which content stored in the host 12 is printed by the printer 11 connected to the host 12 via a wired or wireless network, a 2-box push system will be employed from among various DLNA network systems defined by the DLNA standard. According to the DLNA standard, the 2-box push system includes a digital media renderer (DMR), which renders content, and a push controller, which pushes content to the DMR.

According to the DLNA standard, the printer 11 functions as a DMR defined by the DLNA standard to acquire content to be printed from the host 12. Furthermore, according to the DLNA standard, the host 12 functions as a push controller defined by the DLNA standard to transmit content stored in the host 12 to the printer 11. The push controller is a device model embodied by adding a part of functions of a digital media server (DMS), which provides content, e.g., a media transport server function, to functions of a digital media controller (DMC), which sets up a connection between a DMS and a DMR. The 2-box push system described below is merely an example of an application of the present general inventive concept, and the present general inventive concept may also be applied to any other DLNA networks systems defined by the DLNA standard.

For example, the present general inventive concept may also be applied to a 3-box system such as a DMR, which renders content, a DMS, which provides content, and a DMC, which browses contents on the DMS and selects content therefrom and selects a DMR for rendering the selected content. In this case, the DMR prints content, the DMS provides content to be printed, and the DMC sets up a connection between the DMS and the DMR. The DMS and the DMC may be embodied within a single device, such as the server 12, or may be embodied as individual devices.

In the DLNA standard, general devices and mobile devices are defined as separate categories. For example, the DLNA standard defines DMCs corresponding to mobile devices as mobile digital media controllers (M-DMCs) separate from general DMCs. In the present embodiment, both DMCs and M-DMCs will be referred to as DMCs, but other types of devices can be referred to as DMCs.

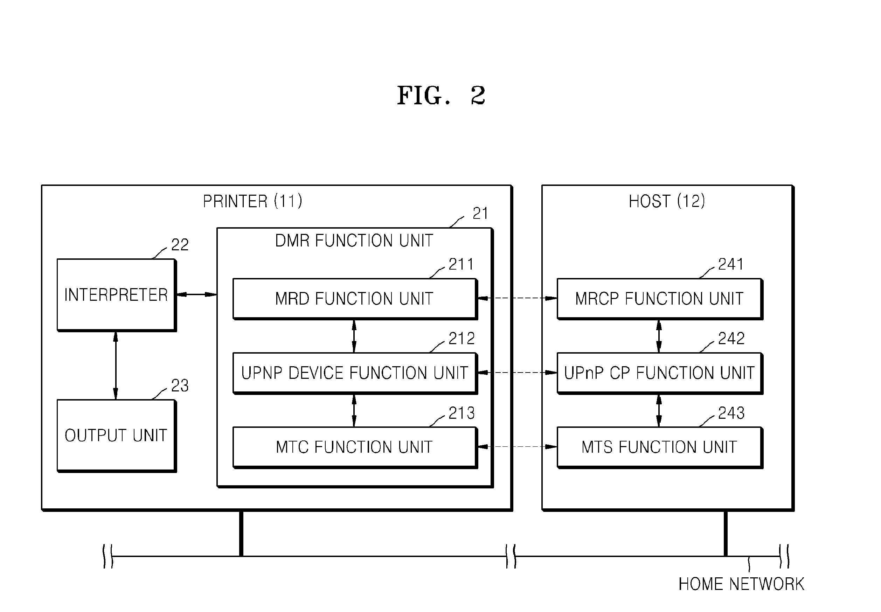

FIG. 2 is a block diagram showing configurations of the printer 11 and the host 12 according to an embodiment. The printer 11 shown in FIG. 1 includes a DMR function unit 21, an interpreter 22, and an output unit 23. The DMR function unit 21 functions as a DMR for receiving content from the host 12 and rendering the content according to the DLNA standard. Especially, in the present embodiment, the DMR function unit 21 acquires content that may be processed by the printer 11 from the host 12 by using at least one of services according to the DLNA standard. To acquire content, the DMR function unit 21 generates a description of the printer 11, which indicates that the printer 11 functions as a DMR complying the DLNA standard, and provides the description to the host 12. The host 12 may recognize the printer 11 as a DMR complying with the DLNA based on the description of the printer 11.

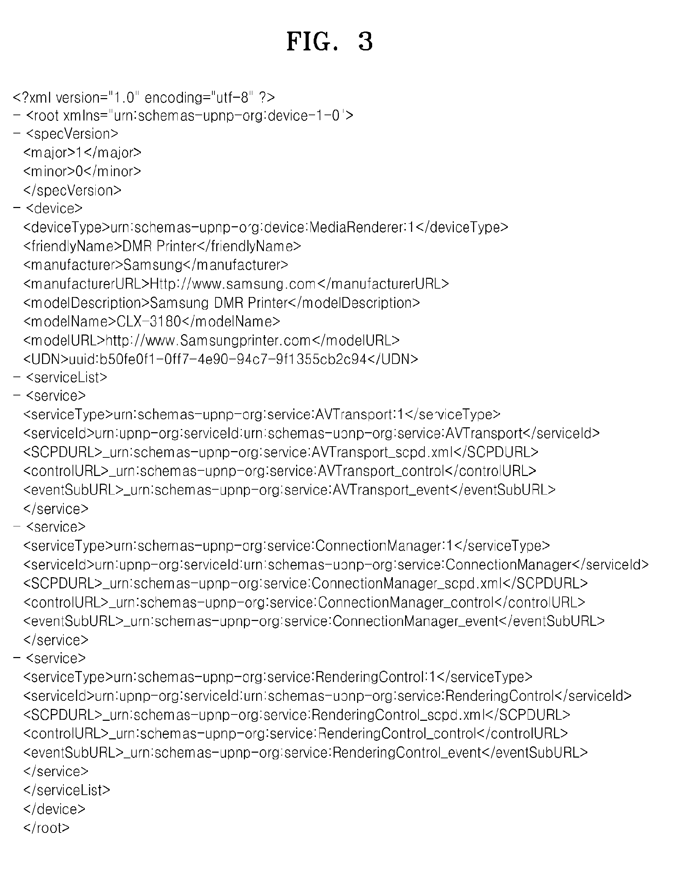

FIG. 3 is a diagram showing description of a printer according to an embodiment. Referring to FIG. 3, description of a printer according to the present embodiment is generated in an XML format complying with the universal plug and play (UPnP) standard. The DLNA standard employs the UPnP standard for discovery and control of a device. The UPnP standard is an extension of plug and play technology, which enables a PC to automatically recognize peripheral devices, to an entire network and enables automatic recognition and control of various devices connected to a network, e.g., a printer, a digital television (TV), a game console, or the like. Therefore, a description of a printer is generated in an XML format complying with the UPnP standard.

From among items of the description of printer shown in FIG. 3, information for indicating that the printer 11 functions as a media renderer complying with the UPnP standard is written to the item <device>. In detail, one of device types defined by the UPnP standard is written to the sub-item <deviceType> of the item <device>. For example, one of device types including a media renderer, which renders content, and a media server, which provides content, is written to the sub-item <deviceType> of the item <device>. In the present embodiment, "Mediarenderer," which indicates that the printer 11 is a media renderer complying with the UPnP standard, is written to the sub-item <deviceType>.

From among names which may indicate the printer 11, a name more familiar to a user than an IP address is written to the sub-item <friendlyName>. In the present embodiment, "DMR Printer" is written to the sub-item <friendlyName>. The name of the manufacturer of the printer 11 is written to the sub-item <manufacturer>. In the present embodiment, "Samsung" is written to the sub-item <manufacturer>. The uniform resource locator (URL) of a website of a manufacturer of the printer 11 is written to the sub-item <manufacturerURL>. In the present embodiment, "http://www.samsung.com" is written to the sub-item <manufacturerURL>. A name of the printer 11, which is a more detailed name than the name written to the sub-item <friendlyName>, is written to the sub-item <modelDescription>. In the present embodiment, "Samsung DMR Printer" is written to the sub-item <modelDescription>. The model number of the printer 11 is written to the sub-item <modelName>. In the present embdoimnet, "CLX-3180" is written to the sub-item <modelName>. The URL regarding the printer model is written to the sub-item <modelURL>. In the present embodiment, "http://www.samsungprinter.com" is written to the sub-item <modelURL>.

From among the items described above, some of the items, for example, the sub-items <friendlyName> and <modelDescription>, may be provided in a form to be recognized by a user of the host 12, so that the user may recognize that the printer 11 shown in FIG. 1 is a DMR printer functioning as a media renderer complying with the UPnP standard.

Information for indicating UPnP services provided by the printer 11 is written to the item <service>. For the printer 11 to function as a media renderer complying with the UPnP standard, it is necessary for the printer 11 to provide the service RenderingControl and the service ConnectionManager, which are defined as services of a media renderer in the UPnP standard. The service RenderingControl enables the host 12, which corresponds to a UPnP control point, to control various rendering functions of the printer 11, which corresponds to a UPnP media renderer. The service Connection Manager enables the host 12, which corresponds to a UPnP control point, to discover information required for transmitting content desired by the printer 11, which corresponds to a UPnP media renderer. Furthermore, it is necessary for the printer 11 to provide service AVTransport, which is defined as a service of AV architecture in the UPnP standard, to acquire content from the host 12 as a media renderer complying with the UPnP standard. The service AVTransport enables the printer 11 to locate the location of content corresponding to a print request made by the host 12.

As a DMR, the DMR function unit 21 provides information regarding processing capabilties of the printer 11 to the host 12 by using the service ConnectionManager. The host 12 determines whether content is printable content that may be printed by the printer 11 or not based on the information regarding processing capabilities of the printer 11 and provides content to the printer based on a result of the determination. Therefore, the printer 11 may acquire printable content from the host 12. Furthermore, as a DMR, the DMR function unit 21 acquires the location of content the host 12 desires to print from the host 12 by using the service AVTransport and acquires content based on the location thereof.

The interpreter 22 generates data that is printable by the output unit 23 by interpreting content acquired by the DMR function unit 21. Examples of formats printable by printers currently sold on the market include postscript (PS), printer command language (PCL), and portable document format (PDF). Based on how the interpreter 22 is embodied by the designer of the printer 11, the interpreter 22 may be capable of interpreting all of the formats stated above, may be capable of interpreting a part of the formats stated above, or may be capable of interpreting different formats other than the formats stated above, e.g., joint photographic experts group (JPEG), extensible hypertext markup language (XHTML), etc.

In the present embodiment, the information regarding processing capabilities of the printer 11 refers to information regarding how many types of content the printer 11 may interpret and print. Therefore, the information regarding processing capabilities of the printer 11 includes information regarding formats of content that may be interpreted by the interpreter 22. The interpreter 22 provides such the information regarding processing capabilities of the printer 11 to the host 12 via the DMR function unit 21. In other words, the DMR function unit 21 provides the information regarding processing capabilities of the printer 11, which is transmitted from the interpreter 22, to the host 12 by using at least one of services complying with the DLNA standard.

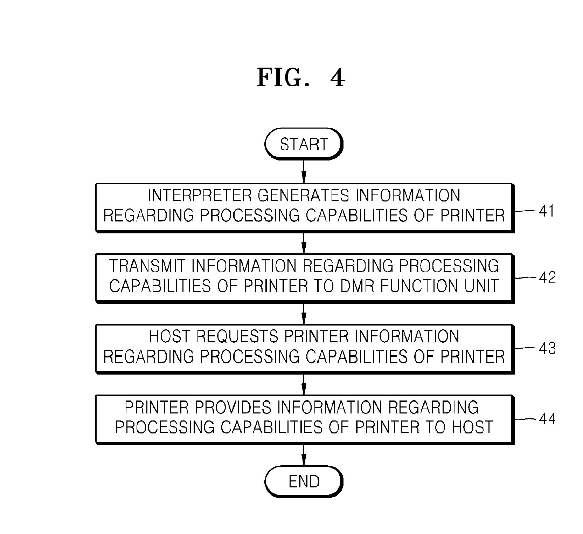

FIG. 4 is a flowchart of a method of transmitting the information regarding processing capabilities of the printer 11, according to an embodiment. Hereinafter, the method of transmitting the information regarding processing capabilities of the printer 11 as described above will be described in closer detail with reference to FIG. 4.

In operation 41, the interpreter 22 generates the information regarding processing capabilities of the printer 11, the information including information regarding formats of contents that may be interpreted by the interpreter 22. In operation 42, the interpreter 22 transmits the information generated in the operation 41 to the DMR function unit 21. In operation 43, the host 12 requests the information regarding processing capabilities of the printer 11 to the printer 11. For example, the host 12 requests the information regarding processing capabilities of the printer 11 by invoking the action GetProtocollnfo() of the service ConnectionManager. In operation 44, the printer 11 provides the information regarding processing capabilities of the printer 11 to the host 12 in response to the request made in the operation 43. For example, the printer 11 provides the information regarding processing capabilities of the printer 11 in return of the action GetProtocolInfo().

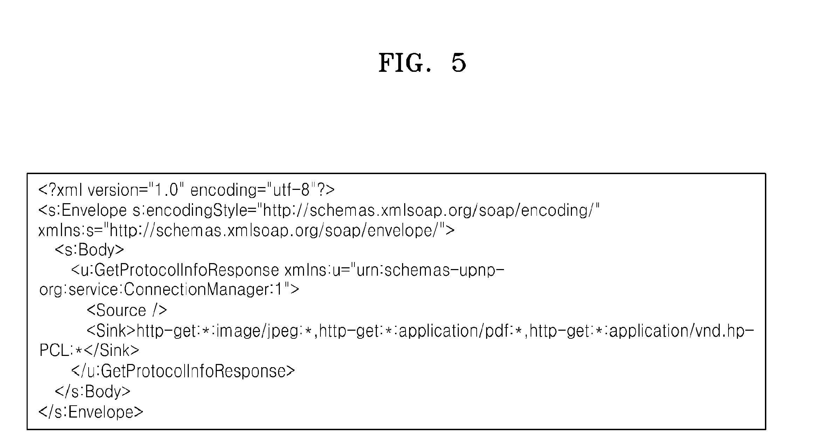

FIG. 5 is a diagram showing information regarding processing capabilities of a printer, according to an embodiment. Referring to FIG. 5, the information regarding processing capabilities of the printer according to the present embodiment is generated in the XML format. According to the information regarding processing capabilities of the printer shown in FIG. 5, the printer 11 shown in FIG. 2 supports the JPEG format, the PDF format, and the PCL format.

The output unit 23 prints content based on interpretation of the content made by the interpreter 22. In other words, the output unit 23 forms an image of content by using printable data generated by the interpreter 22 and prints the image.

Referring to FIG. 2, the DMR function unit 21 includes a media renderer device (MRD) 211, a UPnP device function unit 212, and a media transport client (MTC) function unit 213. In correspondence to the configuration of the DMR function unit 21, the host 12 includes a media renderer control point (MRCP) function unit 241, a UPnP control point (CP) function unit 242, and a metal transport server (MTS) function unit 243.

The MRD function unit 22 of the DMR function unit 21 functions as an UPnP AV media renderer, which renders AV content according to the UPnP standard. In correspondence thereto, the MRCP function unit 241 of the host 12 functions as a UPnP AV CP, which controls rendering of the UPnP AV media renderer according to the UPnP standard. Especially, in the present embodiment, the MRD function unit 22 provides information regarding UPnP service provided by the printer 11 to the host 12 by generating description of the printer 11, which indicates that the printer 11 is a DMR printer functioning as a media renderer complying the UPnP standard, and processes actions of UPnP services invoked by the host 12. The MRCP function unit 241 recognizes the UPnP services provided by the printer 11 based on the description of the printer 11 provided by the printer 11. Furthermore, the MRCP function unit 241 recognizes processing capabilities of the printer 11 and invokes actions of the UPnP services to provide content the host 12 desires to print, based on the processing capabilities of the printer 11.

The UPnP device function unit 212 of the DMR function unit 21 functions as a UPnP device, which advertises the printer 11 for discovery and control of the printer 11 by the host 12, provides description of the printer 11, and processes UPnP protocols for providing information regarding UPnP events, according to the UPnP standard. In correspondence thereto, the UPnP CP function unit 242 functions as a UPnP CP, which discovers and controls the printer 11 corresponding to a UPnP device and processes UPnP protocols for acquiring information regarding UPnP events, according to the UPnP standard.

The MTC function unit 213 of the DMR function unit 21 functions as a hypertext transfer protocol (HTTP) client, which receives content and control data of the host 12 from the host 12 according to the DLNA standard, where the control data is data used by the host 12 to control the printer 11. In correspondence thereto, the MTS function unit 243 of the host 12 functions as a HTTP server, which transmits content and control data of the host 12 to the printer 11 by using the HTTP, according to the DLNA standard. For example, when the MTC function unit 213 requests content the host 12 desires to print by using an instruction HTTP GET, the MTS function unit 243 transmits the content the host desires to print by using the HTTP in response to the request.

Although not shown in FIG. 2, the DMR function unit 21 of the printer 11 and the host 12 may further include network connectivity units complying with the DLNA standard. The network connectivity unit performs wired or wireless communication with the host 12 by using an IPv4 protocol defined by the DLNA standard and various other network protocols. For example, the network connectivity unit may perform wired communication with the host 12 according to institute of electrical and electronics engineers (IEEE) 803.3i standard, IEEE 802.3u standard, or multimedia over coax alliance (MoCA) standard. Furthermore, the network connectivity unit may perform wireless communication with the host 12 according to IEEE 802.11 a/b/g/n standards or Bluetooth standard.

Furthermore, the host 12 may further include a storage device for storing contents and a unit functioning as a CP for acquiring content from an external DMS complying with the DLNA standard.

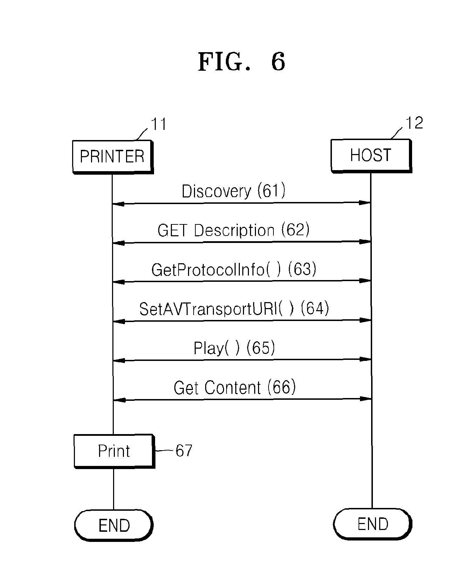

FIG. 6 is a flowchart of a method of printing content by using the printer 11 as a DMR, according to an embodiment. Referring to FIG. 6, the method of printing content according to the present embodiment includes steps chronologically carried out by the printer 11 and the host 12 shown in FIG. 2. Therefore, the descriptions of the printer 11 and the host 12 with respect to FIG. 2 may also apply to the method shown in FIG. 6. Furthermore, the description of the method shown in FIG. 6 may also apply to the printer 11 and the host 12 shown in FIG. 2.

In operation 61, the printer 11, as a DMR, advertises UPnP services, which are required for printing content, via a network. Next, the host 12 browses UPnP services required for printing content to be printed from among contents stored in the host 12 and discovers the printer 11, which functions as a DMR providing the required UPnP services. In operation 62, the host 12, as the push controller, requests description of the printer 11, which is discovered in the operation 61 and functions as the DMR, by using the instruction HTTP GET with respect to the printer 11. Next, the printer 11, as the DMR, provides the description of the printer 11 in response to the request of the description of the printer 11.

In operation 63, the host 12, as the push controller, invokes the protocol GetProtocolInfo() of the service Connection Manager provided by the printer 11, based on the description of the printer 11 acquired in the operation 62. Next, the printer 11, as the DMR, provides a transmission protocol and a list of content formats supported by the printer 11, in response to the invoke of the action GetProtocolInfo(). In the present embodiment, since the MTC function unit 213 of the printer 11 acquires content by using the HTTP, the transmission protocol supported by the printer 11 may be the HTTP. Since the interpreter 22 of the printer 11 may interpret formats including PS, PCL, and PDF, the content formats supported by the printer 11 may include PS, PCL, and PDF.

In operation 64, the host 12, as the push controller, selects content of a format printable by the printer 11 based on the transmission protocol and the list of content formats provided in the operation 62, according to an instruction from a user, and invokes the action SetAVTransportURI() of the service AVTransport provided by the printer 11 to inform the location of content to be received by the transmission protocol supported by the printer 11, that is, the URL of content. Next, the printer 11, as the DMR, acquires the location of content the host 12 desires to print by invoking the action SetAVTransportURI(). Accordingly, the host 12 may specify the location of content on a network selected by a user by invoking the action SetAVTransportURI().

In operation 65, the host 12, as the push controller, invokes the action Play() of the service AVTransport provided by the printer 11 to initiate printing of the content specified in the operation 63. The host 12 may specify a playback method of the content, such as playback speed, playback location, and so on, by invoking the action Play(). In the present embodiment, a method of printing content is specified by specifying a method of playback of the content. For example, the playback speed of content may be mapped to the number of pages of the content to be printed, whereas the playback location of the content may be mapped to designation of pages of the content to be printed. Next, the printer 11, as the DMR, acquires a method of printing the content, such as the number of pages to be printed of the content and pages to be printed of the content, by invoking the action Play() and prepares to print the content based on the acquired method. Such a method of printing content may be specified by invoking actions other than the action Play(). For example, density for printing content may be specified by invoking the action setBrightness().

In operation 66, when the preparation of printing content is completed in the operation 65, the printer 11, as the DM R, requests content the host 12 desires to print by using the instruction HTTP GET with respect to the location acquired in the operation 64, and, in response to the request, the host 12 transmits the requested content by using the HTTP. Next, the printer 11 acquires the content the host 12 desires to print. In operation 67, the printer 11 prints the content acquired in the operation 66 according to the method of printing the content prepared in the operation 65.

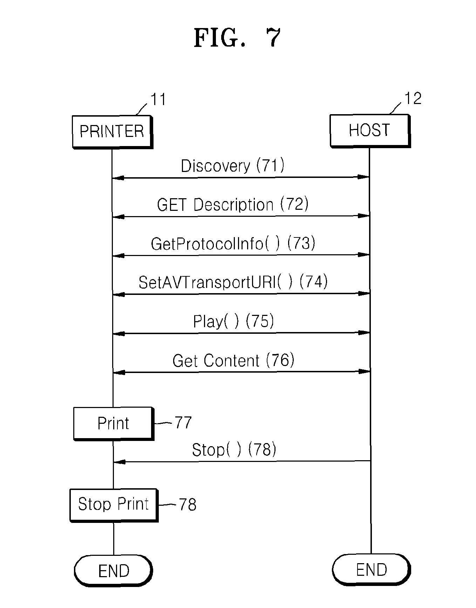

FIG. 7 is a diagram showing a method of printing content according to a modification of the embodiment shown in FIG. 6. Referring to FIG. 7, the method shown in FIG. 7 further includes a step of cancelling a task of printing content. Therefore, operations 71 through 77 of the method shown in FIG. 7 are identical to the operations 61 through 67 of the method shown in FIG. 7. In operation 78, the host 12, as the push controller, invokes the action Stop() of the service AVTransport provided by the printer 11 to cancel a task of printing content in the operation 77. In operation 79, the printer 11, as the DMR, stops to print the content according to the invoking of the action Stop(). It would be obvious to one of ordinary skill in the art that various methods of printing content other than the methods shown in FIGS. 6 and 7 may be used by utilizing various actions defined by the UPnP standard.

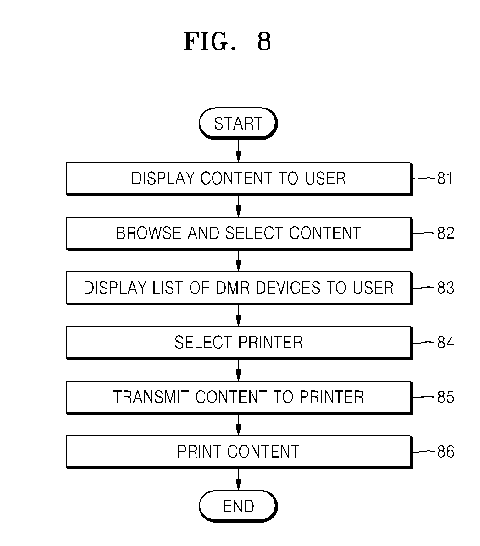

FIG. 8 is a flowchart of a method of printing content via an interaction between the host 12 shown in FIG. 2 and a user. Referring to FIG. 8, the method of printing content according to the present embodiment includes operations that are chronologically processed by the printer 11 and the host 12 based on an interaction between the host 12 and a user. Therefore, the descriptions of the printer 11 and the host 12 with respect to FIG. 2 may apply to the method shown in FIG. 8. Furthermore, the description of the method shown in FIG. 8 may also apply to the printer 11 and the host 12 shown in FIG. 2.

In operation 81, the host 12 displays contents that are either stored in the host 12 or stored in another device to a user. In operation 82, the user browses the contents displayed by the host 12 and selects at least one content to be printed by the printer 11. For user to browser contents, the host 12 or a DMS connected to the host 12 may provide a service ContentDirectory complying the UPnP standard.

In operation 83, the host 12 displays a list of various DMR devices capable of rendering the content selected in the operation 82. Examples of DMR devices capable of rendering the content selected in the operation 82 may not only include the printer 11 shown in FIG. 2, but also include a digital TV, which forms an image of content on a display, and a game console. In operation 84, the user selects the printer 11, which corresponds to a DMR capable of printing content, based on the list of DMR devices displayed by the host 12. In the present embodiment, since the host 12 indicates the printer 11 by using the name recorded in the item <friendlyName> or the item <modelDescription> in description of the printer 11, the user may easily distinguish the printer 11 from other DMR devices connected to the host 12 and select a DMR device indicated as a printer, that is, the printer 11. Such the name of the printer 11 may be indicated not only by the item <friendlyName> or the item <modelDescription> in description of the printer 11, but also by an icon or metadata.

In operation 85, the host 12 transmits data of the content selected in the operation 82 to the printer 11 selected in the operation 84. In operation 86, the printer 11 receives the content transmitted by the host 12 and prints the received content.

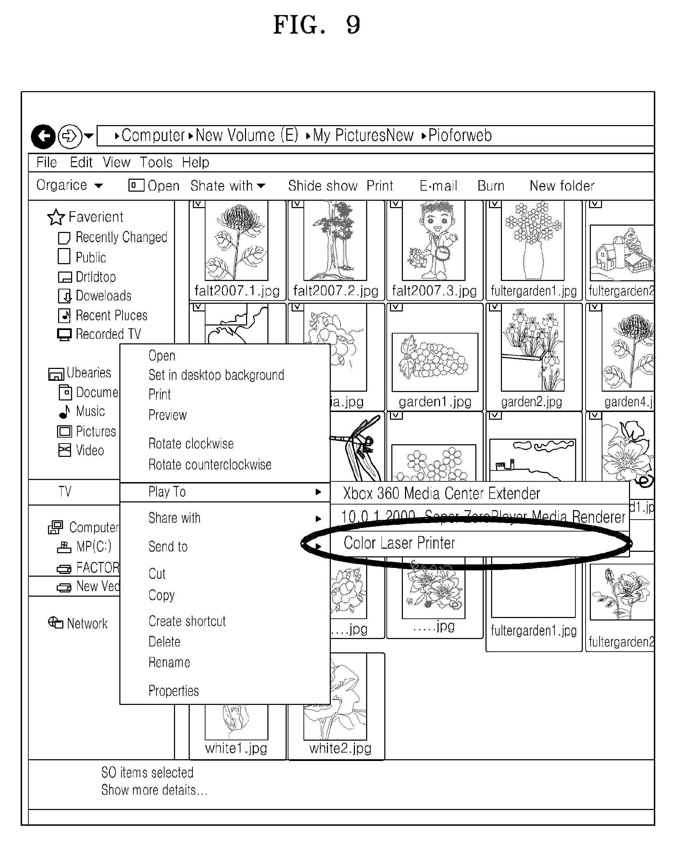

FIG. 9 is a diagram showing an example of user interfaces (UIs) displayed by the host 12 shown in FIG. 2. Since a computer using Windows 7 includes a DMC function complying with the DLNA standard, the computer may display a UI as shown in FIG. 9. A user may browse images by using a browser provided by Windows 7 and selects content to be printed. Next, the user selects the printer 11 from among DMR devices capable of rendering the content selected by the user by using a context menu provided by Windows 7. Referring to FIG. 9, the printer 11 is indicated by the name 'Color Laser Printer,' and thus the user may easily distinguish the printer 11 from other DMR devices.

According to the embodiments of the present general inventive concept as described above, general DLNA devices not supporting the DMPr function and the PR function, e.g., devices supporting DMC function complying with the DLNA standard, may print content by using networking function complying the DLNA standard without installing an additional application or driver for embodying the DMPr function and the PR function. Especially, due to system limitations for mobility, it is difficult to install additional application or driver to mobile devices, such as mobile phones, and thus embodiments of the present general inventive concept may be very useful for mobile devices supporting DMC function.

The embodiments of the present general inventive concept can be written as computer programs and can be implemented in general-use digital computers that execute the programs using a computer readable recording medium. Examples of the computer readable recording medium include magnetic storage media (e.g., ROM, floppy disks, hard disks, etc.), optical recording media (e.g., CD-ROMs, or DVDs), etc.

While the present general inventive concept has been particularly shown and described with reference to exemplary embodiments thereof, it will be understood by those of ordinary skill in the art that various changes in form and details may be made therein without departing from the spirit and scope of the present general inventive concept as defined by the following claims.

## Claims

1. An image forming apparatus for forming an image according to a predetermined standard, comprising:
a renderer function unit, which acquires content that may be processed by the image forming apparatus from a host by using at least one of services complying with the predetermined standard;
an interpreter, which provides information regarding processing capabilities of the image forming apparatus to the host via the renderer function unit and interprets the content; and
an output unit, which forms and outputs an image corresponding to the content based on the interpretation of the content.

2. The image forming apparatus of claim 1, wherein the information regarding processing capabilities comprises information regarding formats of content that may be interpreted by the interpreter.

3. The image forming apparatus of claim 2, wherein the renderer function unit provides the information regarding processing capabilities to the host by using the service and acquires content of a format that may be interpreted by the interpreter from the host.

4. The image forming apparatus of claim 1, where the renderer function unit acquires location of the content from the host by using the service and acquires the content based on the acquired location of the content.

5. The image forming apparatus of claim 1, wherein the renderer function unit provides description of the image forming apparatus, which indicates that the image forming apparatus functions as a media renderer, to the host and acquires the content by using a service indicated by the description.

6. The image forming apparatus of claim 5, wherein the description of the image forming apparatus includes a name identifying the image forming apparatus from devices connected to the host.

7. The image forming apparatus of claim 5, wherein the renderer function unit comprises:
a media renderer function unit, which generates description of the image forming apparatus and processes an action complying with the predetermined standard, the action being invoked by the host;
a device function unit, which advertises the image forming apparatus for discovery and control of the image forming apparatus by the host and processes a protocol for providing description of the image forming apparatus; and
a client function unit, which functions as a client for acquiring content from the host.

8. A method of forming an image by rendering content according to a predetermined standard, the method comprising:
providing description of an image forming apparatus, the description indicating that the image forming apparatus is a media renderer, to the host;
acquiring content from the host, which received the description, by using at least one of services defined in the predetermined standard; and
forming and outputting an image corresponding to the acquired content.

9. The method of claim 8, further comprising providing information regarding processing capabilities of the image forming apparatus to the host.

10. The method of claim 9, wherein the information regarding processing capabilities comprises information regarding formats of content that may be processed by the image forming apparatus, and
content of a format that may be processed by the image forming apparatus is acquired by providing the information regarding processing capabilities.

11. The method of claim 8, further comprising providing a transmission protocol and a list of content formats supported by the image forming apparatus to the host in response to invoking of an action of a service in the predetermined standard.

12. The method of claim 8, further comprising acquiring location of the content by invoking an action of a service in the predetermined standard,
wherein the content is acquired by using the acquired location of the content.

13. The method of claim 8, further comprising acquiring a method of printing the content by invoking an action of a service in the predetermined standard,
wherein an image of the content is formed and printed according to the method of printing the content.

14. The method of claim 8, further comprising stopping formation of an image of the content in response to an invoked action of a service in the predetermined standard.

15. A non-transitory computer readable recording medium having recorded thereon a computer program for implementing a method of forming an image by rendering content according to a predetermined standard, the method comprising:
providing description of an image forming apparatus, the description indicating that the image forming apparatus is a media renderer, to a host;
acquiring content from the host, which received the description, by using at least one of services defined in the predetermined standard; and
forming and outputting an image of the acquired content.
